# EUROPÄISCHE PATENTANMELDUNG

(11) **EP 1 839 542 A2**
(43) Veröffentlichungstag der Anmeldung: **03.10.2007**
(21) Anmeldenummer: 07405074.1
(22) Anmeldetag: 08.03.2007
(51) Int. Cl.: A47J 31/24, A47J 31/00

(54) **Heisswasserabgabevorrichtung**

(30) Priorität: 27.03.2006 CH 4782006
(71) Anmelder: JURA ELEKTROAPPARATE AG, 4626 Niederbuchsiten (CH)
(72) Erfinder: Reyhanloo, Shahryar, 4573 Lohn Ammannsegg (CH)
(74) Vertreter: EGLI-EUROPEAN PATENT ATTORNEYS

(57) **Zusammenfassung**

Bei einer Heisswasserabgabeeinrichtung für eine Getränkebereitungsmaschine, insbesondere für eine Kaffeemaschine, ist wenigstens ein Bedienungselement (K) zur Auswahl und Auslösung der Ausgabe von Heisswasserportionen in wenigstens zwei verschiedenen, voreingestellten und im wesentlichen nichtüberlappenden Heisswassertemperaturbereichen vorgesehen. Es ist auch ein Anzeigeelement zur Anzeige des mit dem wenigstens einen Bedienungselement (K) ausgewählten Heisswassertemperaturbereiches vorhanden. Damit wird die Bereitung verschiedenartiger Tees mit verbesserter Qualität ermöglicht.

## Beschreibung

Die Erfindung betrifft eine Heisswasserabgabeeinrichtung für eine Getränkebereitungsmaschine nach Patentanspruch 1 sowie eine Getränkebereitungsmaschine mit einer erfindungsgemässen Heisswasserabgabeeinrichtung nach Patentanspruch 7.

Die Erfindung betrifft insbesondere eine Heisswasserabgabeeinrichtung für eine Kaffeemaschine, wobei die Heisswasserabgabeeinrichtung eine Anzahl von Bedienungselementen zur Auswahl und Auslösung der Ausgabe von Heisswasserportionen mit unterschiedlichen und voreingestellten Heisswassertemperaturen aufweist.

Insbesondere im nicht-kommerzionellen Bereich des Einsatzes von Getränkebereitungsmaschinen besteht noch immer ein Bedarf, Heisswasser für bestimmte Getränke, beispielsweise für verschiedene Tee-Arten, mit einer bestimmten vorwählbaren Temperatur zur Verfügung zu stellen. Zwar verfügen die meisten gängigen Kaffee- oder Espressomaschinen über eine Heisswasser-Ausgabefunktion, allerdings kann die Heisswassertemperatur in den meisten Fällen weder vorgewählt noch eingestellt werden.

Andererseits ist heute auch hinlänglich bekannt, dass verschiedene Tee-Arten, wie beispielsweise Grüntee, Schwarztee, Kräutertees, Medizinaltees etc. zur Erzielung der besten Resultate hinsichtlich ihres Geschmackes oder ihrer Wirkung zum Teil nicht nur höchst unterschiedliche Zubereitungszeiten, sondern auch sehr unterschiedliche Zubereitungstemperaturen erfordern.

Aus der CA-2 335 420 ist ein Verfahren und eine Getränkebereitungsmaschine bekannt, die diesen Anforderungen Rechnung trägt und insbesondere zur Zubereitung verschiedener, speziell im asiatischen Kulturraum häufig anzutreffender, Tee-Arten vorbereitet ist. Die offenbarte Maschine hat eine Anzahl von Bedienungselementen (Drucktasten) zur Auswahl und zur Auslösung der Ausgabe von Heisswasserportionen mit unterschiedlichen und voreingestellten Heisswassertemperaturen. Dabei sind zur Erleichterung der Bedienung die Drucktasten direkt mit den entsprechenden verschiedenen Tee-Arten beschriftet. Jeder Tee-Art ist dann eine bestimmte Heisswassertemperatur zugeordnet. Zur Bereitstellung von Heisswasser mit der für die Wahl der Tee-Art erforderlichen bzw. zugeordneten Temperatur werden zwei Wasserbehälter verwendet, in denen Heisswasser vorhanden ist, das auf zwei verschiedenen Temperaturen gehalten wird. Dennoch scheint das Gerät eher für den kommerziellen Gebrauch vorgesehen zu sein und es erscheint auch fast ausschliesslich auf die Bedürfnisse der Tee-Zubereitung ausgerichtet.

Die Aufgabe der vorliegenden Erfindung besteht darin, eine Heisswasserabgabeeinrichtung für eine Getränkebereitungsmaschine, insbesondere für eine Kaffeemaschine, anzugeben, die bei einfacher Bedienbarkeit auch die Bereitung verschiedenartiger Tees mit verbesserter Qualität ermöglicht.

Diese Aufgabe wird durch die Merkmale der Patentanspruchs 1 gelöst.

Die Lösung beinhaltet, dass bei einer Heisswasserabgabeeinrichtung für eine Getränkebereitungsmaschine, insbesondere für eine Kaffeemaschine, wenigstens ein Bedienungselement zur Auswahl und Auslösung der Ausgabe von Heisswasserportionen in wenigstens zwei (vorzugsweise drei) verschiedenen, voreingestellten und im wesentlichen nichtüberlappenden Heisswassertemperaturbereichen ausgelegt ist, und dass auch ein Anzeigeelement zur Anzeige des mit dem mindestens einen Bedienungselement ausgewählten Heisswassertemperaturbereiches vorhanden ist. Dabei kann das mindestens eine Bedienungselement als drehbarer Bedienungsknopf mit einer Auslöseeinrichtung ausgeführt sein, wobei die Auslöseeinrichtung vorzugsweise eine im drehbaren Bedienungsknopf eingebaute Drucktaste ist.

Durch die Kombination "drehbarer Bedienungsknopf mit eingebauter Drucktaste" zusammen mit einem geeigneten Anzeigeelement, beispielsweise einem LED- oder LCD-Display, wird erreicht, dass mit einer minimalen Anzahl von Betätigungselementen eine möglichst grosse Funktionalität erzielt wird. So kann nach der Vorwahl "Heisswasserausgabe" mittels des drehbaren Bedienungsknopfes und des zugehörigen Anzeigeelementes zunächst auf einfachste Weise ein gewünschter Heisswassertemperaturbereich ausgewählt werden. Danach kann der gewünschte und ausgewählte Heisswasser-Ausgabevorgang auf ebenso einfache Weise mittels der im drehbaren Bedienungsknopf eingebauten Drucktaste auch noch ausgelöst bzw. gestartet werden.

Das erfindungsgemässe Konzept eignet sich naturgemäss für eine beliebige Anzahl von einstellbaren Heisswassertemperaturbereichen. Vorzugsweise sind es aber deren drei, nämlich ein erster "niedriger" Heisswassertemperaturbereich für die Erzeugung von Heisswasser im Bereich von ca. 65°C bis 75°C, dann ein zweiter "normaler" Heisswassertemperaturbereich für die Erzeugung von Heisswasser im Bereich von ca. 75°C bis 85°C, und schliesslich ein dritter "hoher" Heisswassertemperaturbereich für die Erzeugung von Heisswasser im Bereich von ca. 85°C bis 95°C. Die Verfügbarkeit von drei Heisswassertemperaturbereichen dürfte den meisten praktischen Bedürfnissen für die Teebereitung in recht hoher Qualität Rechnung tragen und hat dennoch den Vorteil, dass die Getränkebereitungsmaschine als Ganzes doch relativ einfach und übersichtlich gehalten werden kann.

Alternativ ist jedoch auch eine weiter vereinfachte Bauweise mit nur zwei auswählbaren Heisswassertemperaturbereichen möglich. So kann beispielsweise auch nur ein erster "unterer" Heisswassertemperaturbereich für die Erzeugung von Heisswasser in einem ersten Temperaturbereich und ein zweiter "oberen" Heisswassertemperaturbereich für die Erzeugung von Heisswasser in einem zweiten Temperaturbereich vorgesehen sein.

Wie bereits erwähnt, eignet sich das Konzept speziell für Kaffee- oder Espressobereitungsmaschinen in nicht-kommerzionellen Anwendungsbereichen, wie z.B. für Haushalte und Kleinbüros, insbesondere aber für gängige Maschinen bei denen Kaffee mit Heisswasser unter Druck aufbrühbar ist, da bei diesen Geräten alle notwendigen Bauteile für die Wahl und die Ausgabe von Heisswasser in der Regel ohnehin bereits vorhanden sind.

Weiterhin ist es natürlich auch möglich, das dargelegte Konzept für Kaffeemaschinen mit einer erfindungsgemässen Heisswasserabgabeeinrichtung insofern zu erweitern, als auch (oder auch noch) eine Stufe "mit Vorwahl" einbezogen werden kann. Unter der Betriebsart "mit Vorwahl" ist zu verstehen, dass die gewünschte Heisswassertemperatur vor jedem Heisswasserbezug explizit vorgewählt werden kann. Auch bei dieser Variante kann die Betriebsmodus-Auswahl natürlich auf die gleiche Art wie bei der Wahl der Heisswassertemperaturbereiche (Niedrig, Normal oder Hoch) mittels des dafür vorgesehenen drehbaren Bedienungsknopfes und der darin eingebauten Drucktaste vorgenommen werden.

Im folgenden wird der Ablauf eines Heisswasserbezuges sowie der Ablauf einer Temperatur-Einstellung für die Heisswassertemperaturbereiche an einer erfindungsgemässen Heisswasserabgabeeinrichtung bzw. einer Getränkebereitungsmaschine mit einer derartigen Heisswasserabgabeeinrichtung anhand eines Beispiels näher erläutert.

In den Zeichnungen zeigt:
- Fig. 1: den Ablauf eines Heisswasserbezuges bei einer erfindungsgemässen Heisswasserabgabeeinrichtung, und
- Fig. 2: einen Ausschnitt aus den Ablauf einer Temperatur-Einstellung für die Heisswassertemperaturbereiche bei einer erfindungsgemässen Heisswasserabgabeeinrichtung.

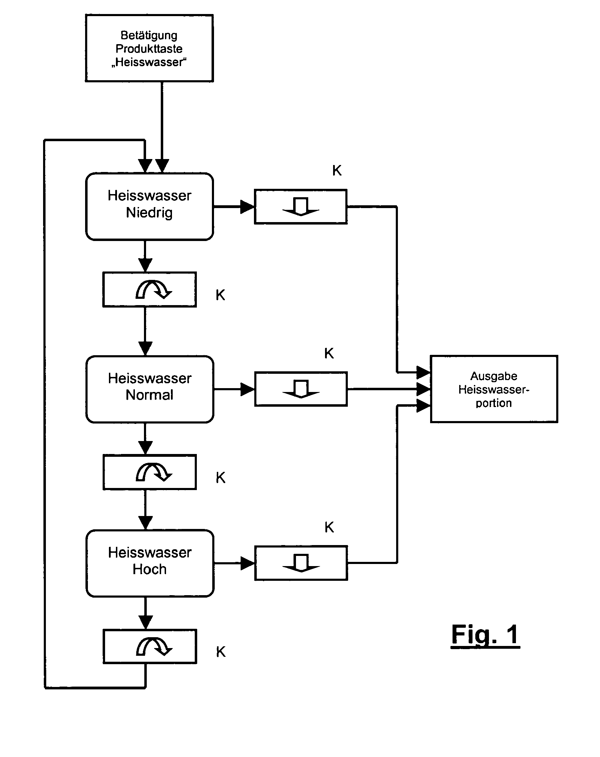

Die Figur 1 zeigt in schematischer Weise den Ablauf eines Heisswasserbezuges bei einer erfindungsgemässen Heisswasserabgabeeinrichtung. Dazu ist ein drehbarer Bedienungsknopf K vorhanden, mit dem drei verschiedene Drehstellungen selektierbar sind. Der Bedienungsknopf weist zusätzlich noch eine darin eingebaute, vorzugsweise zentral angeordnete, Drucktaste auf, die sich in jeder Drehstellung betätigen lässt. Weiterhin ist ein Anzeigeelement vorhanden, mit dem die den jeweiligen Drehstellungen zugeordneten Funktionen sowie vorzugsweise auch Hinweise zur Bedienung der Heisswasserabgabeeinrichtung dargestellt werden können. Das Anzeigeelement ist deshalb Vorteilhaftehrweise ein zur Anzeige von alphanumerischen Zeichen geeignetes LED- oder LCD-Modul.

Zunächst initialisiert der Benützer der Getränkebereitungsmaschine, beispielsweise durch Betätigung einer Produkttaste "Heisswasser", eine Heisswasserausgabe. Auf dem Anzeigeelement erscheint daraufhin der Anzeigetext "Heisswasser Niedrig", sofern sich der Bedienungsknopf K zum Zeitpunkt der Initialisierung in einer ersten Drehstellung befindet. Wenn der Benützer in der Folge ohne anderweitige Manipulationen sofort die Drucktaste des Bedienungsknopfes K drückt, so erfolgt die Ausgabe einer Heisswasserportion in einem niedrigen Heisswassertemperaturbereich, also beispielsweise im Bereich zwischen 65°C bis 75°C.

Will der Benützer der Getränkebereitungsmaschine jedoch eine Heisswasserausgabe in einem anderen Heisswassertemperaturbereich, so dreht er vor der Aktivierung des Druckknopfes den Bedienungsknopf K in eine zweite Drehstellung, wo der Anzeigetext "Heisswasser Normal" erscheint, oder sogar in eine dritte Drehstellung, wo der Anzeigetext "Heisswasser Hoch" erscheint. Mit der Aktivierung des Druckknopfes kann aus jeder dieser Drehstellungen die Ausgabe einer Heisswasserportion im entsprechenden Heisswassertemperaturbereich erfolgen. So kann der Heisswassertemperaturbereich für die Wahl "Heisswasser normal" beispielsweise 75°C bis 85°C, für die Wahl "Heisswasser Hoch" beispielsweise 85°C bis 95°C betragen.

So ist es beispielsweise möglich, für die Bereitung eines Grüntees die Wahl "Heisswasser Niedrig", für die Bereitung eines Kräuter- oder Früchtetees die Wahl "Heisswasser Normal" und für die Bereitung eines Schwarztees die Wahl "Heisswasser Hoch" zu treffen, um so je nach Tee-Art die besten Resultate bezüglich Geschmack oder Wirkung zu erzielen.

Selbstverständlich lässt sich das gleiche Bedienungskonzept für den Ablauf eines Heisswasserbezuges auch auf nur zwei oder aber auch auf vier oder mehr Heisswassertemperaturbereiche ausdehnen. Sind es nur zwei Heisswassertemperaturbereiche, so könnte dies beispielsweise ein "unterer" Heisswassertemperaturbereich und ein "oberer" Heisswassertemperaturbereich sein. In vielen Fällen dürften jedoch drei Heisswassertemperaturbereiche einen guten Kompromiss hinsichtlich dem tatsächlichen Bedarf an Einstellmöglichkeiten darstellen.

Die erfindungsgemässe Heisswasserabgabeeinrichtung eignet sich besonders gut zum Einbau in eine Getränkebereitungsmaschine bei der Kaffee mit Heisswasser unter Druck aufbrühbar ist. Derartige Maschinen sind meist ohnehin mit mindestens einem Durchlauferhitzer, oft sogar mit zwei Durchlauferhitzern zur Erzeugung von Heisswasser und Dampf, ausgestattet. Somit kann die Heisswasserbereitung und separate Heisswasserabgabe in wenigstens zwei verschiedenen, voreingestellten und im wesentlichen nichtüberlappenden Heisswassertemperaturbereichen in dem Fachmann bekannter Weise mit dem wenigstens einen Durchlauferhitzer einer solchen Maschine realisiert werden.

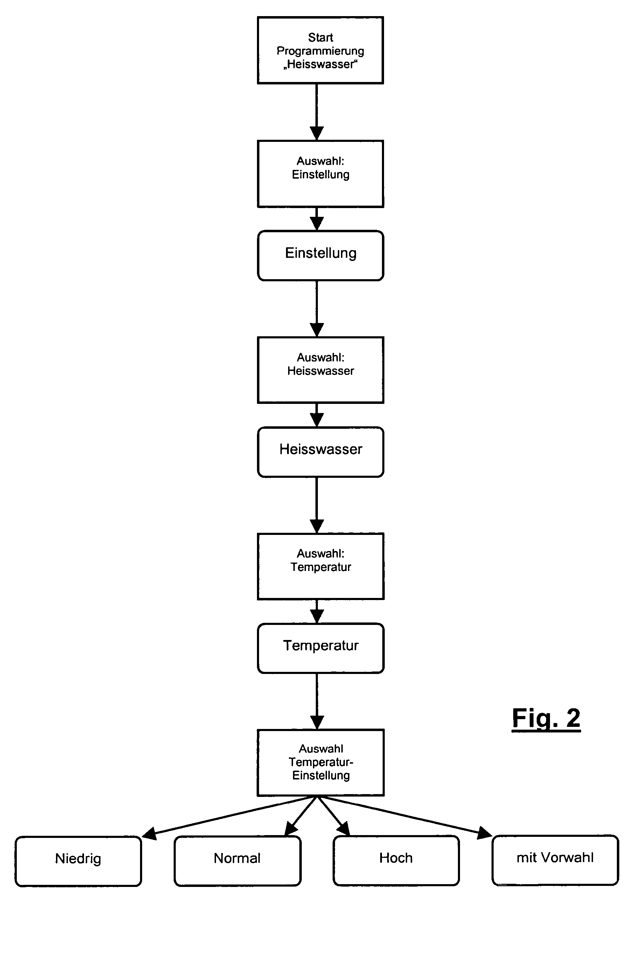

Die Figur 2 zeigt einen Ausschnitt aus den Ablauf einer Temperatur-Einstellung bzw. Programmierung für die Heisswassertemperaturbereiche bei einer erfindungsgemässen Heisswasserabgabeeinrichtung. Da heutzutage viele Getränkebereitungsmaschinen die Programmierung individueller Parameter für die Getränkebereitung durch den Benützer erlauben, kann natürlich auch die Temperatur-Einstellung für die Heisswassertemperaturbereiche in dieser Weise vorgesehen sein.

Zunächst initialisiert der Benützer der Getränkebereitungsmaschine in gerätespezifischer Weise, beispielsweise durch Betätigung einer Programmiertaste ,Einstellung', einen Einstell- bzw. Programmiermodus. Auf dem Anzeigeelement erscheint daraufhin beispielsweise der Anzeigetext "Einstellung".

Mit geeigneten (hier nicht dargestellten) Auswahlmitteln trifft der Benützer die Unter-Auswahl ,Auswahl: Heisswasser'. Auf dem Anzeigeelement erscheint daraufhin der Anzeigetext "Heisswasser".

Mit den zur Verfügung stehenden Auswahlmitteln trifft der Benützer dann die Unter-Auswahl ,Auswahl: Temperatur'. Auf dem Anzeigeelement erscheint daraufhin der Anzeigetext "Temperatur".

Mit den zur Verfügung stehenden Auswahlmitteln trifft der Benützer dann die Unter-Auswahl ,Auswahl: Temperatureinstellung'. Je nach Unter-Auswahl der Temperatur-Einstellung kann er dann die Temperatureinstellung entweder für die Heisswassertemperaturbereiche ,Niedrig' (z.B. 65°c bis 75°C), ,Normal' (z.B. 75°C bis 85°C) und ,Hoch' (z.B. 85°C bis 95°C) vornehmen, oder er kann eine Betriebsart ,mit Vorwahl' wählen. Auf dem Anzeigeelement erscheinen dazu je nach Auswahl einer der Anzeigetexte "Niedrig", "Normal", "Hoch" oder "mit Vorwahl".

Sind diese Einstellungen gemacht, so hat dies zur Folge, dass im Normalbetrieb der Getränkebereitungsmaschine folgendes der Fall ist:
- Bei der Auswahl "Niedrig": ein Heisswasserbezug wird immer mit der Temperatureinstellung ,Niedrig' ausgeführt.
- Bei der Auswahl "Normal": ein Heisswasserbezug wird immer mit der Temperatureinstellung ,Normal' ausgeführt.
- Bei der Auswahl "Hoch": ein Heisswasserbezug wird immer mit der Temperatureinstellung ,Hoch' ausgeführt.
- Bei der Auswahl "mit Vorwahl": die gewünschte Temperatur des Heisswassers muss für jeden Heisswasserbezug vorgewählt und bestätigt werden.

Die möglichen Mittel zur Einstellung eines konkreten Temperaturwertes (Niedrig, Normal oder Hoch) wie auch der Ablauf einer Temperaturwert-Einstellung bei der Auswahl "mit Vorwahl" sind zwar nicht Gegenstand dieser Offenbarung, dennoch kann grundsätzlich auch hierzu wiederum der drehbare Bedienungsknopf (K) und die darin eingebauten Drucktaste verwendet werden.

## Patentansprüche

1. Heisswasserabgabeeinrichtung für eine Getränkebereitungsmaschine, insbesondere für eine Kaffeemaschine, wobei die Heisswasserabgabeeinrichtung eine Anzahl von Bedienungselementen (K) zur Auswahl und Auslösung der Ausgabe von Heisswasserportionen mit unterschiedlichen und voreingestellten Heisswassertemperaturen aufweist,
**dadurch gekennzeichnet, dass**
wenigstens ein Bedienungselement (K) zur Auswahl und Auslösung der Ausgabe von Heisswasserportionen in wenigstens zwei verschiedenen, voreingestellten und im wesentlichen nichtüberlappenden Heisswassertemperaturbereichen ausgelegt ist, und dass ein Anzeigeelement zur Anzeige des mit dem wenigstens einen Bedienungselement (K) ausgewählten Heisswassertemperaturbereiches vorhanden ist.

2. Heisswasserabgabeeinrichtung nach Patentanspruch 1,
**dadurch gekennzeichnet, dass** das wenigstens eine Bedienungselement (K) zur Auswahl und Auslösung der Ausgabe von Heisswasserportionen in wenigstens drei verschiedenen, voreingestellten und im wesentlichen nichtüberlappenden Heisswassertemperaturbereichen ausgelegt ist.

3. Heisswasserabgabeeinrichtung nach Patentanspruch 1
oder 2, **dadurch gekennzeichnet, dass** das mindestens eine Bedienungselement (K) ein drehbarer Bedienungsknopf mit einer Auslöseeinrichtung ist.

4. Heisswasserabgabeeinrichtung nach Patentanspruch 3,
**dadurch gekennzeichnet, dass** die Auslöseeinrichtung ein im drehbaren Bedienungsknopf eingebaute Drucktaste ist.

5. Heisswasserabgabeeinrichtung nach Patentanspruch 1,
**dadurch gekennzeichnet, dass** das die Heisswassertemperaturbereiche folgendes umfassen:
- einen ersten "unteren" Heisswassertemperaturbereich für die Erzeugung von Heisswasser in einem ersten Temperaturbereich.
- einen zweiten "oberen" Heisswassertemperaturbereich für die Erzeugung von Heisswasser in einem zweiten Temperaturbereich.

6. Heisswasserabgabeeinrichtung nach Patentanspruch 2
**dadurch gekennzeichnet, dass** das die Heisswassertemperaturbereiche folgendes umfassen:
- einen ersten "niedrigen" Heisswassertemperaturbereich für die Erzeugung von Heisswasser im Bereich von ca. 65°C bis 75°C.
- einen zweiten "normalen" Heisswassertemperaturbereich für die Erzeugung von Heisswasser im Bereich von ca. 75°C bis 85°C.
- einen dritten "hohen" Heisswassertemperaturbereich für die Erzeugung von Heisswasser im Bereich von ca. 85°C bis 95°C.

7. Getränkebereitungsmaschine mit einer Heisswasserabgabeeinrichtung nach einem der Patentansprüche 1 bis 6, **dadurch gekennzeichnet, dass** in der Getränkebereitungsmaschine Kaffee mit Heisswasser unter Druck aufbrühbar ist und die Getränkebereitungsmaschine zudem für die Heisswasserbereitung und separate Heisswasserabgabe in wenigstens zwei verschiedenen, voreingestellten und im wesentlichen nichtüberlappenden Heisswassertemperaturbereichen ausgelegt ist.

8. Getränkebereitungsmaschine mit einer Heisswasserabgabeeinrichtung nach Patentanspruch 7, **dadurch gekennzeichnet, dass** die Heisswasserbereitung mittels wenigstens einem Durchlauferhitzer erfolgt.

9. Getränkebereitungsmaschine nach Patentanspruch 7 oder 8, **dadurch gekennzeichnet, dass** weiterhin eine Einrichtung mit einer Vorwahlmöglichkeit vorhanden ist, wobei mit dieser Einrichtung für jeden Heisswasserbezug eine gewünschte Heisswassertemperatur vorwählbar ist.
